# EUROPÄISCHE PATENTSCHRIFT

(11) **EP 2 496 850 B1**
(45) Veröffentlichungstag und Bekanntmachung des Hinweises auf die Patenterteilung: **10.02.2016**
(21) Anmeldenummer: 10778927.3
(22) Anmeldetag: 29.10.2010
(51) Int. Cl.: F16B 47/00

(54) **SAUGNAPF**
SUCTION CUP
VENTOUSE

(30) Priorität: 06.11.2009 DE 102009046508
(43) Veröffentlichungstag der Anmeldung: 12.09.2012
(73) Patentinhaber: BSH Hausgeräte GmbH, 81739 München (DE)
(72) Erfinder: SABEC, Roman, 3327 Smartno (SI); UPLAZNIK, Marko, 3312 Prebold (SI)
(86) Internationale Anmeldenummer: PCT/EP2010/066520
(87) Internationale Veröffentlichungsnummer: WO 2011/054764

(56) Entgegenhaltungen:
- DE-B- 2 124 511
- DE-U1-202008 011 812
- US-A1- 2002 185 575
- US-A1- 2006 285 428
- US-A1- 2008 111 037

## Beschreibung

### Hintergrund der Erfindung

Die vorliegende Erfindung betrifft einen Saugnapf zum Anbringen an eine Anlagefläche, insbesondere nach dem Oberbegriff des Anspruchs 1. Ein derartiger Saugnapf ist aus der DE 20 2008 011 812 U1 bekannt.

### Stand der Technik

Derartige Saugnäpfe finden in der Praxis in vielfältiger Weise Anwendung. So können Saugnäpfe beispielsweise als Befestigungsmittel im Haushalt dienen, oder ein weiteres Anwendungsgebiet ist die automatisierte Produktion, bei welcher unterschiedlichste Bauteile bzw. Komponenten bewegt werden müssen. Auch bekannt sind Saugnäpfe als Tragehilfe für Glasplatten, um einen geeigneten Tragegriff für die sperrigen Glasplatten bereitstellen zu können. Saugnäpfe werden in der Regel auf glatte Oberflächen angebracht und sie bilden eine Art Saugvorrichtung, bei welcher ein möglichst hohes Vakuum und eine verhältnismäßig breite Anlagefläche auf dem glatten Untergrund gebildet werden soll. Die Saugnäpfe werden üblicherweise als Gummikörper hergestellt, und werden auf die Oberfläche aufgepresst, so dass in der Ansaugschale ein Vakuum entstehen kann. Durch einen Andrückrand wird gewährleistet, dass das Vakuum in der Ansaugschale aufrechterhalten werden kann, um somit eine Haltekraft auf oder an die Oberfläche zu erzielen. Diese Haltekraft soll hoch sein, damit der Saugnapf fest an der Oberfläche anhaften kann.

Um diese Haftung zu verbessern schlägt die DE 10 2007 057 889 A1 den Einsatz einer umlaufenden Rippe, welche auf die Außenkante eines Saugnapfes drückt, um somit eine hohe Dichtwirkung bzw. eine sichere Aufrechterhaltung des Vakuums in der Ansaugschale zu gewährleisten. Durch diesen Aufbau, kann die Luft nicht mehr in die Ansaugschale hineinströmen, welches eine sichere und stabile Anhaftung des Saugnapfes auf die Oberfläche bereitstellt.

Ebenfalls bekannt ist die Verwendung von Saugnäpfen als Standfuß für unterschiedliche Vorrichtungen bzw. Geräte, welche beispielsweise auf einem Tisch aufgestellt und betrieben werden können. Die Saugnäpfe sollen die Bewegung des Gerätes verhindern, welche durch Vibrationen und andere Kräfte beispielsweise bei der Verarbeitung von Lebensmitteln entstehen, falls die Saugnäpfe zur Sicherung eines Küchengeräts verwendet worden sind.

Bei all den bekannten Saugnäpfen bzw. Befestigungsvorrichtungen mit Saugnäpfen steht die Anhaftung an die Oberfläche in den Vordergrund. Das Ablösen der Saugnäpfe wird üblicherweise mittels Zusatzvorrichtungen, wie beispielsweise Hebelteile, sicher gestellt, welche den Lufteinlass bzw. Luftzutritt in die Ansaugschale bereitstellen. Eine andere Möglichkeit des Ablösens eines Saugnapfes ist das Aufbringen einer hohen Kraft durch einen Benutzer. Diese bekannten Lösungen haben sich in der Praxis jedoch als unvorteilhaft dargestellt, da die ausgeübte Kraft bei der Verwendung mehrerer Saugnäpfe insbesondere beim Einsatz als Standfuß relativ hoch sein muss, welches zu einem schwierigen Handhaben eines Geräts führt. So muss beispielsweise ein Benutzer die Haltekraft bzw. Ansaugkraft der Saugnäpfe, welche als Standfüße eingesetzt sind, durch Ausübung einer relativ hohen Kraft auf das Gehäuse überwinden. Dies kann beispielsweise zur Zerstörung des Gehäuses oder im schlimmsten Falle zu einer Verletzung des Benutzers.

### Der Erfindung zugrundeliegende Aufgabe

Der Erfindung liegt die Aufgabe zugrunde, einen Saugnapf bereitzustellen, welcher eine sichere und einfache Handhabung gewährleistet.

### Erfindungsgemäße Lösung

Die Lösung der gestellten Aufgabe gelingt durch einen Saugnapf mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Es wird ein Saugnapf zum Anbringen an eine Anlagefläche, umfassend eine Unterdruckkammer zur Ausbildung einer Haltekraft bereitgestellt. Die Unterdruckkammer wird durch einen umlaufenden Dichtbereich zum Zusammenwirken mit der Anlagefläche definiert. Der Saugnapf umfasst wenigstens ein auf dem Dichtbereich angeordnetes Mittel zum Verringern einer der Haltekraft entgegenwirkenden Ablösekraft aufweist. Durch das erfindungsgemäße Mittel zum Verringern der Ablösekraft wird gewährleistet, dass ein Benutzer eine nicht verhältnismäßig hohe Ablösekraft aufwenden muss, um den Saugnapf von eine Anlagefläche auf der dieser anhaftet abzulösen. Das Mittel zum Verringern stellt einen definierten Zeitpunkt des Ablösens sicher, und weist bis zu diesem Zeitpunkt eine hohe Haltekraft, da die Mittel zum Verringern die Funktionalität in diesem Bereich, d.h. bis zum Ablösezeitpunkt, nicht beeinflussen. Der Ablösezeitpunkt wird durch den Druckausgleiche zwischen Unterdruckkammer bzw. Ansaugschale und Umgebung definiert, welches durch Luftzutritt durch eine Dichtlippe entsteht.

Erfindungsgemäß weist das Mittel zum Verringern der Ablösekraft eine Vielzahl an Anformungen auf, welche in einem Randbereich des umlaufenden Dichtbereichs angeordnet sind. Die Anformungen stellen eine besonders bevorzugte Ausgestaltung des Mittels zum Verringern bereit, da diese leicht herstellbar sind und ferner einen genauen Ablösezeitpunkt bereitstellen können.

### Bevorzugte Ausgestaltung der Erfindung

Gemäß einer Ausführungsform der vorliegenden Erfindung sind die Anformungen auf dem Dichtbereich des Saugnapfes symmetrisch beabstandet angeordnet. Durch den symmetrischen Aufbau wird gesichert, dass beim Druckausgleich, d.h. beim Ablösen des Saugnapfes, die Luft von allen Seiten in die Unterdruckkammer an den Anformungen vorbei hineinströmen kann. Es ist auch denkbar dass der Saugnapf nur eine oder zwei Anformungen aufweist. Die zwei Anformungen können bevorzugt diametral symmetrisch angeordnet sein.

Zweckmäßigerweise sind die Anformungen auf dem im Wesentlichen flächigen Dichtbereich ausgebildet. Dies vereinfacht die Herstellung und die Wirkweise der Anformungen wird gesichert.

Bevorzugt ist der Saugnapf einstückig aus einem elastisch-flexiblen Material hergestellt ist. Durch diese Wahl des Materials, insbesondere eines Gummi-umfassenden Material, wird eine hohe Dichtwirkung für das Vakuum in der Unterdruckammer erreicht und ferner kann die Ablösekraft auf das Mittel zum Verringern mittels des elastisch-flexiblen Körpers des Saugnapfes übertragen werden.

Es ist bevorzugt, dass der Dichtbereich ringförmig in einem Kontaktbereich der Unterdruckkammer mit der Anlagefläche ausgebildet ist. Durch den rotationssymmetrischen Aufbau des Dichtbereichs kann eine besonders sichere Dichtwirkung für das Vakuum in der Unterdruckkammer erreicht werden.

Gemäß einer Ausführungsform der Erfindung sind die Anformungen jeweils als Kreissegment auf dem umlaufenden Dichtbereich ausgebildet. Durch diese vorteilhafte Form kann die Hebelstruktur unterstützt werden, und die definierte und verringerte Ablösekraft kann genau in der Herstellung des Saugnapfes Eingestellt werden.

Besonders bevorzugt ist der Kreisbogen der kreissegmentförmigen Anformungen in Richtung der Unterdruckkammer angeordnet und die Kreissehne der kreissegmentförmigen Anformungen verläuft entlang einer äußeren Linie des Randbereichs. Folglich kann durch den Abstand des Kreisbogens zum Kontaktbereich bzw. zu der Dichtlippe die Ablösekraft definieren.

Vorteilhaft umfasst der Saugnapf ein Befestigungsmittel zum Montieren des Saugnapfes an eine Vorrichtung. Das Befestigungsmittel erlaubt eine einfache Montage und stellt einen sicheren Halt bereit.

Gemäß einer Ausführungsform der vorliegenden Erfindung umfasst ein Küchengeräteboden mindestens einen Saugnapf, welcher eingerichtet ist das Küchengerät auf die Anlagefläche zu sichern. Durch die Verwendung des erfindungsgemäßen Saugnapfes als Standfuß für ein Küchengerät wird eine hohe Stabilität gewährleistet bei gleichzeitiger verbesserten Handhabung im Falle des Ablösens des Küchengeräts von einer Anlagefläche.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
Fig. 1 eine Ansicht auf die Unterdruckkammer des Saugnapfes gemäß der vorliegenden Erfindung;
Fig. 2 eine perspektivische Ansicht des Saugnapfes;
Fig. 3 eine Seitenansicht des Saugnapfes gemäß der vorliegenden Erfindung;
Fig. 4a bis 4d die prinzipielle Funktionsweise des Saugnapfes;
Fig. 5 den Verlauf der Ablösekraft eines herkömmlichen Saugnapfes gegenüber einem Saugnapf gemäß der vorliegenden Erfindung; und schließlich
Fig. 6 den Boden eines Küchengeräts mit Saugnäpfen gemäß der vorliegenden Erfindung.

### Ausführliche Beschreibung anhand eines Ausführungsbeispiels

Bei der nachfolgenden Beschreibung der vorliegenden Erfindung bezeichnen gleiche Bezugszeichen gleiche oder vergleichbare Komponenten.

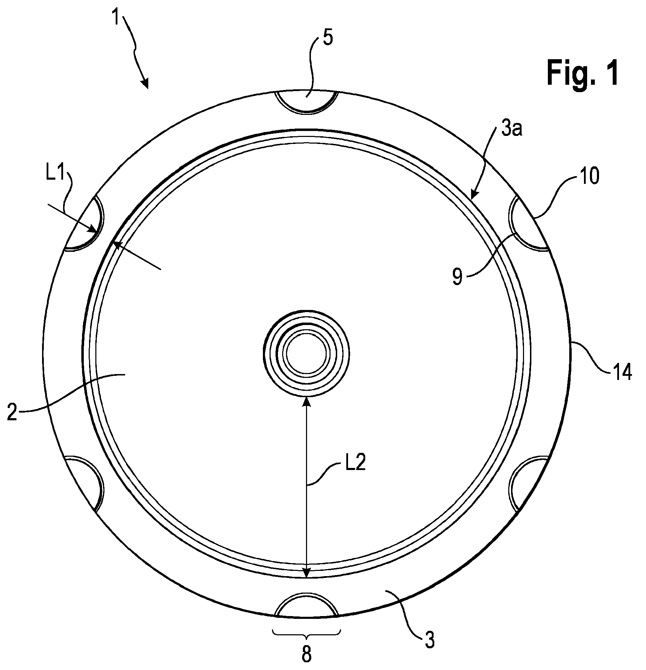

Fig. 1 zeigt einen Saugnapf gemäß der vorliegenden Erfindung. Der Saugnapf 1 umfasst eine Unterdruckkammer bzw. Ansaugschale 2 und einen Dichtbereich 3. Üblicherweise wird der Saugnapf auf eine Anlagefläche 11 angepresst und durch die ausgeübte Anpresskraft kann die Luft aus der Unterdruckkammer entweichen. Der Saugnapf 1 besteht aus einem elastisch-flexiblen Material, insbesondere Gummi, so dass die Unterdruckkammer 2 verformt werden kann, damit die Luft ausweichen kann. Nachdem die Luft aus der Unterdruckkammer entwichen ist, entsteht folglich ein Vakuum, welches gegenüber der Umgebung mittels des Dichtbereichs 3, insbesondere der Dichtlippe 3a im Kontaktbereich mit der Anlagefläche 11, des Saugnapfes 1 aufrechterhalten werden kann.

Durch das Vakuum entsteht ein atmosphärischer Druck auf den Saugnapf 1, welcher bewirkt, dass der Saugnapf 1 auf die Anlagefläche 11 angepresst wird. Diese Anpresskraft oder Haltekraft kann auch als Ansaugkraft angesehen werden, welche den Saugnapf 1 auf der Oberfläche bzw. Anlagefläche 11 fixiert bzw. hält. Durch die Wahl des Materials kann ebenfalls die Ansaugkraft bzw. Haltekraft des Saugnapfs 1 definiert werden.

Gemäß einer Ausführungsform der vorliegenden Erfindung ist das Mittel zum Verringern 4 der Ablösekraft als eine Vielzahl an Anformungen 5 realisiert. Die Anformungen sind auf einem Dichtbereich 3 symmetrisch beabstandet ausgebildet. Es ist jedoch denkbar, dass eine unsymmetrische Anordnung der Anformungen 5 realisiert werden kann. Im drucklosen Zustand liegen die Anformungen 5 flächig auf die Annlagefläche 11. Mit drucklosem Zustand ist der Zustand gemeint, in welchem kein Vakuum in der Kammer 2 herrscht. Nachdem der Saugnapf auf eine Oberfläche 11 angepresst worden ist bildet der Dichtbereich 3 eine Dichtlippe im Kontaktbereich 3a mit der Anlagefläche 11, so dass das Vakuum innerhalb der Unterdruckkammer 2 aufrechterhalten werden kann. Falls Luft an der Dichtlippe bzw. den Kontaktbereich 3a in die Unterdruckkammer 2 hineinströmt, verliert der Saugnapf 1 die Haftung, dadurch dass das Vakuum durch Luftzutritt aufgelöst wurde, d.h. ein Druckausgleich zwischen Unterdruckkammer 2 und atmosphärischer Umgebung hat stattgefunden. Der Kontaktbereich bzw. die Dichtlippe 3a bildet sich nachdem die Luft aus der Unterdruckkammer 2 durch die Anpresskraft entwichen ist.

Die elastischen Eigenschaften des Materials, aus dem der Saugnapf 1 besteht, bewirken, dass die Anformungen 5 im angepressten Zustand keinen Kontakt mit der Anlagefläche 11 aufweisen.

Gemäß einer möglichen Ausführungsform der Erfindung sind die Anformungen bzw. Noppen 5 als Kreissegment 8 auf dem Dichtbereich 3 angeformt. Die Höhe der kreissegmentförmigen Anformungen 5 gegenüber der Fläche des Dichtbereichs 3 beträgt bevorzugt 0,2 mm. Der Abstand des Kreisbogens 9 des Kreissegments 8 zum Kontaktbereich 3a entspricht L2 und beträgt ca. 1 mm, wobei auch andere Werte einsetzbar sind. Die Kreissehne 10 des Kreissegmentes 8 verläuft im Wesentlichen entlang einer äußeren Linie 14 im Randbereich 6 des. Dichtbereichs 3 des Saugnapfes 1. Die Kreissehne beträgt gemäß einer Ausführungsform der vorliegenden Erfindung ca. 4 mm. Der Saugnapf 1 ist kreisförmig ausgebildet und weist ein Radius L1 auf. Dieser Radius L1 definiert zusätzlich die Höhe der Haltekraft bzw. Ansaugkraft des Saugnapfes 1. Ein großer Radius entspricht einer vergrößerten Unterdruckkammer 3, welches folglich einen vergrößerten Vakuumbereich definiert.

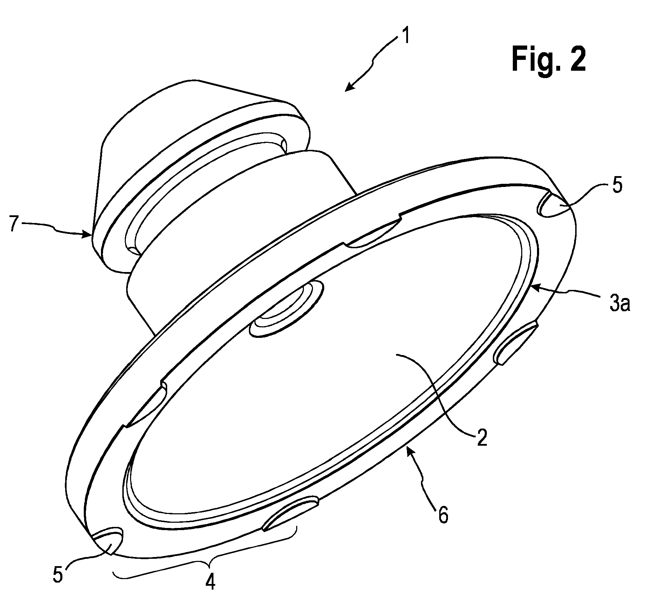

Fig. 2 zeigt eine perspektivische Ansicht eines Saugnapfes gemäß der vorliegenden Erfindung. Die Unterdruckkammer 2 des Saugnapfes 1 ist kuppelförmig ausgebildet und durch das elastisch-flexible Material, kann durch Anpressen des Saugnapfes 1 auf eine Anlagefläche 11 ein Vakuum erzeugt werden. Um ein leichteres Ablösen des Saugnapfes 1 von einer Oberfläche 11, insbesondere falls der Saugnapf 1 als Standfuß eines Küchengeräts Anwendung findet, ist erfindungsgemäß ein Mittel zum Verringern 4 der Ablösekraft des Saugnapfes 1. Gemäß einer bevorzugten Ausführungsform ist das Mittel zum Verringern 4 der Ablösekraft F1 eine Vielzahl an kreissegmentförmigen Anformungen 5, welche bevorzugt einstückig mit dem Körper des Saugnapfes 1 ausgebildet sind.

Der Saugnapf 1 kann als Gummikörper mit Anformungen 5 einfach in einem Herstellungsschritt beispielsweise durch Spritzguss gefertigt werden. Der Saugnapf 1 umfasst weiter ein Befestigungsmittel 7, welches dergestalt ist, dass der Saugnapf 1 als Standfuß für beispielsweise einen Küchengeräteboden 13 Einsatz finden kann. Im angebrachten Zustand des Saugnapfes 1, d.h. nachdem ein Vakuum in der Unterdruckkammer 2 entstanden ist, bildet ein Kontaktbereich 3a eine Dichtlippe auf der Anlagefläche 11 aus, und die Anformungen weisen keinen Kontakt mit der Anlagefläche 11 auf. Der Dichtbereich 3 auf dem die Anformungen 5 ausgebildet sind ist derart ausgebildet, dass der Randbereich 6 mit seiner äußeren Linie 14 im angebrachten Zustand des Saugnapfes sich von der Anlagefläche 11 weg bewegt bzw. abhebt, so dass die Anformungen 5 keinen Kontakt mit der Anlagefläche 11 aufbauen können. Die Dichtlippe im Kontaktbereich 3a des Dichtbereichs 3 gewährleistet, dass kein Luftzutritt in die Unterdruckkammer 2 erfolgen kann, in welcher Vakuum in angebrachten Zustand des Saugnapfes 1 somit aufrecht erhalten werden kann.

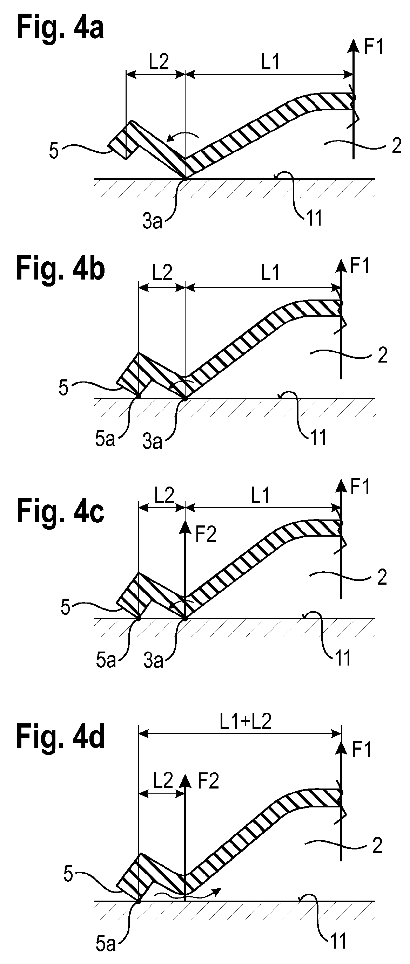

Das Ablösen des Saugnapfes 1 von einer Anlagefläche 11 erfolgt üblicherweise durch Ausübung einer Ablösekraft F1 beispielsweise im Bereich des Befestigungsmittels 7. Die Kraft F1 sollte entgegen der Ansaugkraft bzw. Haltekraft des Saugnapfes 1 auf der Anlagefläche 11 wirken. Durch Ausübung der Ablösekraft F1 und durch die elastischen Eigenschaften des Saugnapfmaterials wird bewirkt, dass die Anformungen 5 gegen die Anlagefläche 11 gedrückt werden, so dass eine Hebelwirkung ausgebildet werden kann, welche die Ablösekraft im Vergleich mit den üblichen Saugnäpfen verringert. Im Folgenden, insbesondere Fig. 4, wird die Funktionsweise des vereinfachten Ablösens des Saugnapfes 1 näher erläutert.

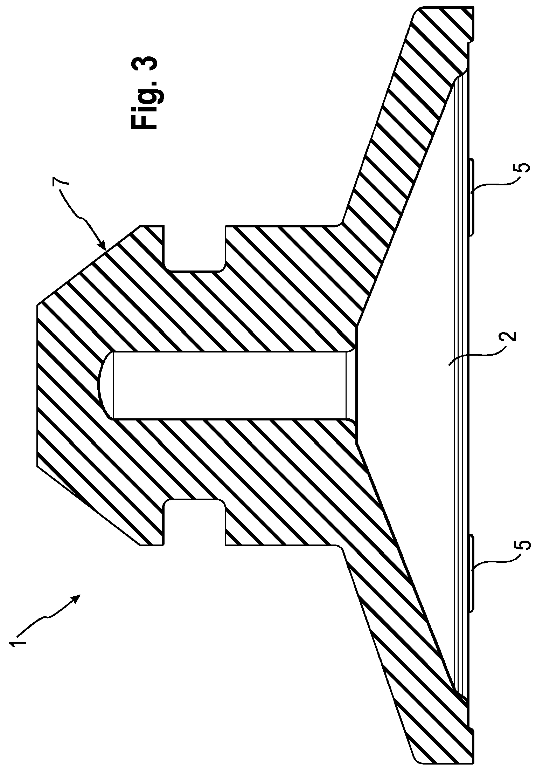

Fig. 3 ist eine Seitenansicht eines Saugnapfes gemäß der vorliegenden Erfindung. Der Saugnapf 1 ist im nicht angebrachten Zustand abgebildet und folglich könnten die Anformungen 5 einen Kontakt mit einer Anlagefläche 11 aufweisen. Die Unterdruckkammer bzw. Ansaugschale 2 weist einen domartigen Aufbau, in welcher sich im angebrachten Zustand ein Vakuum bilden kann. Die Befestigungseinrichtung 7 weist eine Fuge oder einen Flansch auf, an welchem der Saugnapf 1 beispielsweise in einem Geräteboden fixiert bzw. befestigt werden könnte. Dieser Montageflansch sichert den Saugnapf am Geräteboden 13.

Fig. 4a bis 4d zeigen die prinzipielle Funktionsweise des Saugnapfes anhand einer Skizze. Der Saugnapf 1 ist zur Hälfte dargestellt, um die Kräfteverteilung im Falle des Ablösens besser darstellen zu können. Die Anlagefläche 11 beispielsweise die Oberfläche eines Arbeitstisches in der Küche ist ebenfalls schematisch dargestellt. In der Fig. 4a ist der Saugnapf 1 im angebrachten Zustand dargestellt. D.h. ein Vakuum ist in der Unterdruckkammer 2 bzw. Ansaugschale gebildet worden und durch dieses Vakuum wird eine Ansaugkraft bzw. Haltekraft auf den Saugnapf vom atmosphärischen Druck ausgeübt, so dass der Saugnapf 1 auf der Anlagefläche 11 anhaftet und beispielsweise ein Küchengerät (nicht gezeigt) bzw. dessen Boden 13 im Betrieb stabilisiert bzw. sichert.

Am Befestigungsmittel 7 kann eine Ablösekraft F1 beispielsweise in vertikaler Richtung ausgeübt werden, wobei prinzipiell der Saugnapf 1 auch an eine Wand oder einer schrägen Oberfläche anbringbar ist. Das Befestigungsmittel 7 ist in den Fig. 4a bis 4d der Einfachheit halber nicht dargestellt. Durch die Ablösekraft F1 wird der elastische Körper des Saugnapfes 1 so verformt, dass eine Drehung um den Kontaktbereich bzw. die Dichtlippe 3a entsteht. Die schematisch dargestellten Anformungen 5 werden folglich in Richtung der Anlagefläche bewegt. Der Abstand L2 definiert den Zeitpunkt zu welchem der Anlagepunkt 5a der Anformungen 5 die Oberfläche 11 kontaktiert. Dieser Abstand L2 zur Dichtlippe 3a des Saugnapfes 1 definiert ferner die Höhe der Ablösekraft F1, welches mittels einer Hebelstruktur siehe Fig. 4c und 4d auf die Dichtlippe im Kontaktbereich 3a wirkt.

In der Fig. 4c ist der Zeitpunkt gezeigt zu welchem der Anlagepunkt 5a der Anformung 5 die Anlagefläche 11 kontaktiert hat, und folglich entsteht die oben erwähnte Hebelstruktur mit einem Drehpunkt, der mit dem Anlagepunkt 5a der Anformung 5 übereinstimmt. Es sei erwähnt, dass der Anlagepunkt 5a nicht unbedingt einem einzelnen Punkt entspricht, sondern vielmehr durch die Elastizität des Körpers des Saugnapfes 1 bzw. durch den Kreisbogen 9 der jeweiligen Anformungen 5 einem Bereich entspricht, an welchem die Hebelwirkung der Ablösekraft F1 ansetzen kann. Durch diese Hebelstruktur wird folglich eine Kraft F2 auf die Dichtlippe 3a ausgeübt, welche der Haltekraft bzw. Ansaugkraft des Saugnapfes 1 entgegenwirkt. Damit der Saugnapf 1 durch eine verringerte Ablösekraft F1 von der Oberfläche 11 abgelöst werden kann, sind erfindungsgemäß die Mittel zum Verringern 4 vorgesehen, welche in diesem Ausführungsbeispiel als Anformungen 5 realisiert worden sind.

Schließlich zeigt die Fig. 4d den Zeitpunkt an welchem die Dichtlippe 3a nachgegeben hat, und ein Luftzutritt d.h. ein Druckausgleich zur Umgebung hat statt gefunden und der Saugnapf 1 hat seine Ansaugkraft bzw. Haltekraft verloren. Die verringerte Ablösekraft F2 wird folglich durch die Hebelwirkung um den Anlagepunkt 5a definiert und ist eine Funktion des Abstandes L2 zwischen Dichtlippe 3a und Kreisbogen 9 der Anformung 5. Demgemäß wird die verringerte Ablösekraft F1 durch die Anordnung der Mittel zum Verringern 4 relativ zur Dichtlippe bzw. Kontaktbereich 3a des Saugnapfes definiert bzw. eingestellt.

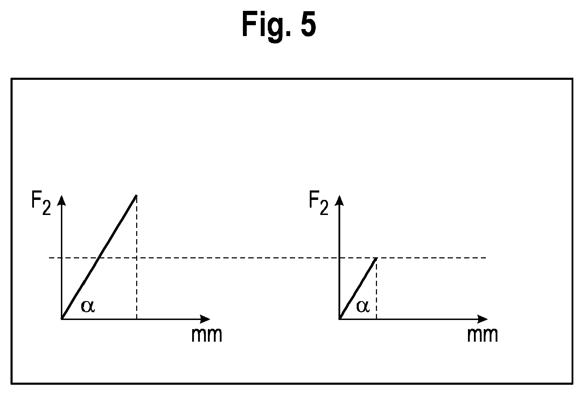

Fig. 5 zeiht den prinzipiellen Kraftverlauf des Saugnapfes verglichen mit einem herkömmlichen Saugnapf. Auf der linken Seite der Fig. 5 wird der Verlauf der Ablösekraft F2 eines herkömmlichen Saugnapfes gezeigt. Die x-Achse entspricht dem Krafthub bezüglich des Wirkpunktes, beispielsweise des Befestigungsmittels 7 des Saugnapfes. Durch die Elastizität des Saugnapfes entsteht der Hub welcher auf der x-Achse beider Diagramme schematisch dargestellt ist. Die y-Achse zeigt der Verlauf der Ablösekraft F2. Bei dem herkömmlichen Saugnapf verläuft der Kraftverlauf linear zu dem Hub und es gibt keinen definierten frühen Zeitpunkt eines Ablösens bzw. eines Druckausgleiches durch Luftzutritt in die Unterdruckkammer 2.

Erfindungsgemäß bewirkt das Mittel zum Verringern 4 der Ablösekraft F2, dass der Druckausgleich und folglich das Ablösen des Saugnapfes zu einem definierten Zeitpunkt entsteht, wobei die Kurvenverläufe bis zu diesem Zeitpunkt analog verlaufen. D.h. bis zu diesem definierten Zeitpunkt stellt der erfindungsgemäße Saugnapf 1 dieselbe Haltekraft bzw. Stabilität bereit. Der Zeitpunkt bzw. der Wert der definierten Ablösekraft wird schematisch mit Hilfe der gestrichelten Linie dargestellt.

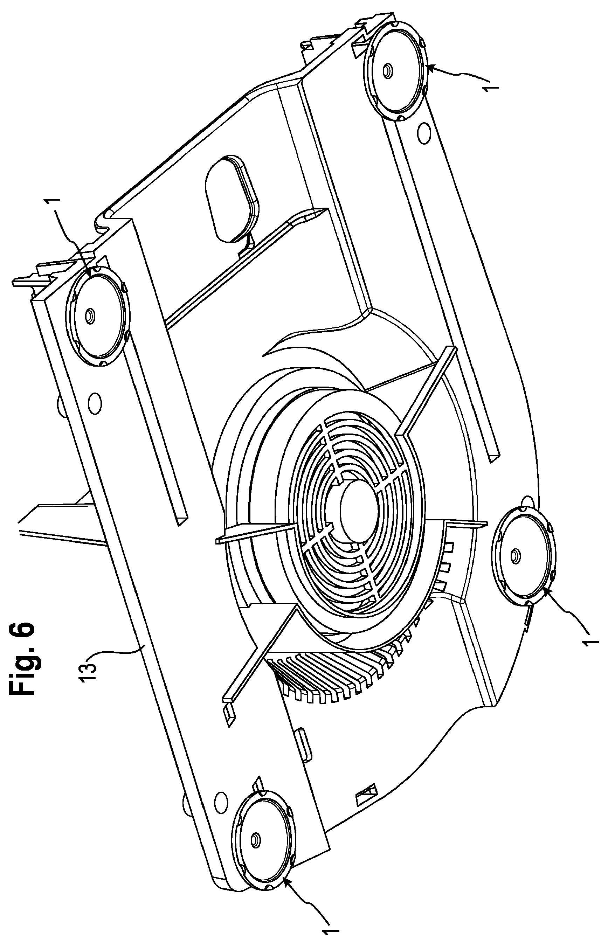

Schließlich zeigt Fig. 6 eine mögliche Anwendung von Saugnäpfen gemäß der vorliegenden Erfindung. Die Saugnäpfen 1 werden mit Hilfe der Befestigungsmittel 7 beispielsweise an einem Boden 13 eines Küchengeräts befestigt. Die Saugnäpfe 1 wirken als Standfüße und nehmen die Vibrationen der im Betrieb genommenen Küchenmaschine bzw. des Küchengeräts auf. Falls das Küchengerät von einer Anlagefläche 11 nach Beendigung der Arbeit oder zwecks Verstellung bewegt werden muss, ist die Kraft die zum Ablösen des Geräts notwendig ist, nicht mehr wie bei üblichen Saugnäpfen verhältnismäßig hoch, sonder weist ein definierten Wert auf, der mittels der Anformungen 5 bzw. dem Mittel zum Verringern 4 der Ablösekraft bereitgestellt worden ist.

Der erfindungsgemäße Saugnapf weist eine definierte und verringerte Ablösekraft auf, welche die Handhabung des Saugnapfes 1 verbessert. Ein Benutzer muss nicht verhältnismäßig hohe Kräfte aufwenden, um eine Ablösung zu erreichen, welches sich als besonders vorteilhaft bei der Verwendung des Saugnapfes als Standfuß eines elektrischen Geräts herausgestellt hat.

### Bezugszeichenliste

- Saugnapf: 1
- Unterdruckkammer bzw. Ansaugschale: 2
- Dichtbereich: 3
- Kontaktbereich bzw. Dichtlippe: 3a

- Mittel zum Verringern der Ablösekraft: 4
- Anformungen bzw. Noppen oder Warzen: 5
- Anlagepunkt: 5a
- Randbereich: 6

- Befestigungsmittel: 7

- Kreissegment: 8
- Kreisbogen des Kreissegmentes: 9
- Kreissehne des Kreissegmentes: 10

- Anlagefläche: 11

- Küchengeräteboden: 13
- Äußere Linie des Randbereichs: 14

## Patentansprüche

1. Saugnapf (1) zum Anbringen an eine Anlagefläche (11), umfassend eine Unterdruckkammer (2) zur Ausbildung einer Haltekraft, welche durch einen umlaufenden Dichtbereich (3) zum Zusammenwirken mit der Anlagefläche (11) definiert ist, wobei der Saugnapf (1) wenigstens ein auf dem Dichtbereich (3) angeordnetes Mittel zum Verringern (4) einer der Haltekraft entgegenwirkenden Ablösekraft (F1) aufweist, **dadurch gekennzeichnet, dass** das Mittel zum Verringern (4) der Ablösekraft (F1) eine Vielzahl an Anformungen (5) aufweist, welche in einem Randbereich (6) des umlaufenden Dichtbereichs (3) angeordnet sind.

2. Saugnapf (1) nach Anspruch 1, **dadurch gekennzeichnet, dass** die Anformungen (5) auf dem Dichtbereich (3) des Saugnapfes (1) symmetrisch beabstandet angeordnet sind.

3. Saugnapf (1) nach Anspruch 1, **dadurch gekennzeichnet, dass** die Anformungen (5) auf dem im Wesentlichen flächigen Dichtbereich (3) ausgebildet sind.

4. Saugnapf (1) nach einem der vorhergehenden Ansprüche, **dadurch gekennzeichnet, dass** der Saugnapf (1) einstückig aus einem elastisch-flexiblen Material hergestellt ist.

5. Saugnapf (1) nach einem der vorhergehenden Ansprüche, **dadurch gekennzeichnet, dass** der Dichtbereich (3) ringförmig in einem Kontaktbereich (3a) der Unterdruckkammer (2) mit der Anlagefläche (11) ausgebildet ist.

6. Saugnapf (1) nach einem der vorhergehenden Ansprüche, **dadurch gekennzeichnet, dass** die Anformungen (5) jeweils als Kreissegment (8) auf dem umlaufenden Dichtbereich (3) ausgebildet sind.

7. Saugnapf (1) nach Anspruch 6, **dadurch gekennzeichnet, dass** der Kreisbogen (9) der kreissegmentförmigen Anformungen (5) in Richtung der Unterdruckkammer (2) angeordnet ist und die Kreissehne (10) der kreissegmentförmigen Anformungen (5) entlang einer äußeren Linie (14) des Randbereichs (6) verläuft.

8. Saugnapf (1) nach einem der vorhergehenden Ansprüche, **dadurch gekennzeichnet, dass** der Saugnapf (1) ein Befestigungsmittel (7) zum montieren des Saugnapfes an eine Vorrichtung (12) aufweist.

9. Küchengeräteboden (13) für ein Küchengerät, umfassend mindestens einen Saugnapf (1) nach einem der vorhergehenden Ansprüche 1 bis 9, **dadurch gekennzeichnet, dass** der mindestens eine Saugnapf (1) eingerichtet ist, um das Küchengerät auf die Anlagefläche (11) zu sichern.

## Claims

1. Suction cup (1) to be applied to a contact surface (11), comprising a vacuum chamber (2) for producing a retention force, which is defined by a peripheral sealing region (3) for interacting with the contact surface (11), wherein the suction cup (1) has at least one means disposed on the sealing region (3) for reducing (4) a release force (F1) that counteracts the retention force, **characterised in that** the means for reducing (4) the release force (F1) has a plurality of mouldings (5), which are disposed in an edge region (6) of the peripheral sealing region (3).

2. Suction cup (1) according to claim 1, **characterised in that** the mouldings (5) are disposed with symmetrical spacing on the sealing region (3) of the suction cup (1).

3. Suction cup (1) according to claim 1, **characterised in that** the mouldings (5) are configured on the essentially flat sealing region (3).

4. Suction cup (1) according to one of the preceding claims, **characterised in that** the suction cup (1) is produced as a single piece from an elastically flexible material.

5. Suction cup (1) according to one of the preceding claims, **characterised in that** the sealing region (3) is configured as a ring shape in a contact region (3 a) between the vacuum chamber (2) and the contact surface (11).

6. Suction cup (1) according to one of the preceding claims, **characterised in that** the mouldings (5) are each configured as a circle segment (8) on the peripheral sealing region (3).

7. Suction cup (1) according to claim 6, **characterised in that** the arc (9) of the circle segment-shaped mouldings (5) is disposed in the direction of the vacuum chamber (2) and the chord (10) of the circle segment-shaped mouldings (5) runs along an outer line (14) of the edge region (6).

8. Suction cup (1) according to one of the preceding claims, **characterised in that** the suction cup (1) has a fastening means (7) for fitting the suction cup to an apparatus (12).

9. Kitchen appliance base (13) for a kitchen appliance, comprising at least one suction cup (1) according to one of the preceding claims 1 to 9, **characterised in that** the at least one suction cup (1) is designed to secure the kitchen appliance to the contact surface (11).

## Revendications

1. Ventouse (1) destinée à être appliquée sur une surface d'appui (11), comprenant une chambre à dépression (2) destinée à générer une force de retenue, laquelle chambre à dépression est définie par une zone étanche (3) périphérique destinée à coopérer avec la surface d'appui (11), la ventouse (1) présentant au moins un moyen (4) situé sur la zone étanche (3) permettant de réduire une force de décollement (F1) antagoniste s'opposant à la force de retenue, **caractérisée en ce que** le moyen (4) permettant de réduire la force de décollement (F1) présente une pluralité de formations (5) qui sont agencées dans une zone de bord (6) de la zone étanche (3) périphérique.

2. Ventouse (1) selon la revendication 1, **caractérisée en ce que** les formations (5) sont agencées de manière symétrique à distance les unes des autres sur la zone étanche (3) de la ventouse (1).

3. Ventouse (1) selon la revendication 1, **caractérisée en ce que** les formations (5) sont exécutées sur la zone étanche (3) essentiellement plane.

4. Ventouse (1) selon l'une des revendications précédentes, **caractérisée en ce que** la ventouse (1) est fabriquée d'une pièce dans un matériau élastique et flexible.

5. Ventouse (1) selon l'une des revendications précédentes, **caractérisée en ce que** la zone étanche (3) est exécutée de manière annulaire dans une zone de contact (3a) de la chambre à dépression (2) avec la surface d'appui (11).

6. Ventouse (1) selon l'une des revendications précédentes, **caractérisée en ce que** les formations (5) sont exécutées à chaque fois en tant que segment de cercle (8) sur la zone étanche (3) périphérique.

7. Ventouse (1) selon la revendication 6, **caractérisée en ce que** l'arc de cercle (9) des formations (5) en forme de segment de cercle est agencé vers la chambre à dépression (2) et la corde de cercle (10) des formations (5) en forme de segment de cercle s'étend le long d'une ligne extérieure (14) de la zone de bord (6).

8. Ventouse (1) selon l'une des revendications précédentes, **caractérisée en ce que** la ventouse (1) présente un moyen de fixation (7) destiné au montage de la ventouse sur un dispositif.

9. Fond (13) d'appareil ménager pour un appareil ménager, comprenant au moins une ventouse (1) selon l'une des revendications 1 à 9, **caractérisé en ce que** l'au moins une ventouse (1) est adaptée pour bloquer l'appareil ménager sur la surface d'appui (11).
